(19) Europäisches Patentamt
European Patent Office
Office européen des brevets

(11) Veröffentlichungsnummer: **0 283 975 B1**

(12) # EUROPÄISCHE PATENTSCHRIFT

(45) Veröffentlichungstag der Patentschrift: **21.04.93**

(51) Int. Cl.[5]: **C08L 69/00**, C08L 33/12, C08L 35/00, G11B 3/70

(21) Anmeldenummer: **88104429.1**

(22) Anmeldetag: **19.03.88**

(54) **Verträgliche Mischungen von Polycarbonat-und Methylmethacrylat-Copolymeren.**

(30) Priorität: **24.03.87 DE 3709562**

(43) Veröffentlichungstag der Anmeldung:
**28.09.88 Patentblatt 88/39**

(45) Bekanntmachung des Hinweises auf die Patenterteilung:
**21.04.93 Patentblatt 93/16**

(84) Benannte Vertragsstaaten:
**DE ES FR GB IT NL**

(56) Entgegenhaltungen:
**EP-A- 0 144 231**
**GB-A- 1 182 807**

(73) Patentinhaber: **Röhm GmbH**
**Kirschenallee Postfach 4242**
**W-6100 Darmstadt 1(DE)**

(72) Erfinder: **Fischer, Jens Dieter, Dr.**
**Moosbergstasse 95**
**W-6100 Darmstadt(DE)**
Erfinder: **Wunderlich Winfried, Dr.**
**Sessartring 11**
**W-6101 Rossdorf 1(DE)**
Erfinder: **Siol Werner, Dr.**
**Goerdelerweg 34**
**W-6100 Darmstadt-Eberstadt(DE)**

**EP 0 283 975 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Polymermischungen. Sie betrifft vor allem solche aus einem aromatischen Polycarbonat, insbesondere dem Polycarbonat von Bisphenol A, und einem Methylmethacrylat-Copolymeren, die sich durch hohe Transparenz auszeichnen.

Stand der Technik

Es ist bekannt, aromatische Polycarbonate, vor allem Polycarbonate von Bisphenol A, mit anderen Polymeren zu vermischen, wobei Kombinationen erhalten werden, die mehrphasig, also unverträgliche Polymermischungen, sogenannte Polymerblends, oder auch homogen, also verträglich, sein können. Verträgliche Polymermischungen werden auch als Polymer-Legierungen bezeichnet.

Polymethylmethacrylat-Formmasse, ein glasklarer, transparenter Kunststoff gibt mit dem Polycarbonat des Bisphenol A, einem ebenfalls transparenten Kunststoff, keine homogenen, transparenten Legierungen, sondern wie u.a. aus der jap. Patentschrift 72 16 063 bekannt ist, Mischungen mit perlartigem Glanz.

Nach der DE-A 22 64 268 wird eine verbesserte Polycarbonat-Formmasse erhalten, wenn dem Polycarbonat ein Acrylpolymeres mit niedrigem Molekulargewicht, das ein aus 90 bis 75 Gew.-% Methylmethacrylat und 10 bis 25 Gew.-% eines Alkylacrylates der Formel

$$H2C = \overset{\overset{\displaystyle X}{|}}{C} - COOR,$$

mit X gleich H oder CH3 und R ein organischer Rest mit 4 bis 12 Kohlenstoffatomen, bestehendes Copolymeres ist, zugesetzt wird. Die Menge des Copolymerzusatzes kann 0,01 bis etwa 50 Gew.-% des Gewichtes der Polycarbonatzusammensetzung betragen. Hierdurch wird die Schmelzviskosität des Polycarbonates bzw. der Mischung ohne Beeinträchtigung der Transparenz mit steigendem Copolymer-Zusatz laufend verringert.

Bei diesen Copolymeren handelt es sich also um polymere Weichmacher, deren Molekulargewicht zur Erzielung der beschriebenen Verträglichkeit aufgrund eigener Versuche mit entsprechenden Copolymeren unter 15 000 liegen muß. Zur Herstellung von Polymerlegierungen, die auch im Bereich hoher Polymethacrylat-Anteile technisch interessante Eigenschaften haben, sind solche Copolymere wegen des bekannten Abfalls der mechanischen Eigenschaften im Molekulargewichtsbereich unter 100 000, insbesondere unter 50 000 (siehe Kunststoff-Handbuch, Band IX, Vieweg/Esser: Polymethacrylate, S. 112 ff) jedoch völlig ungeeignet.

Verträgliche Polymermischungen, die aus einem Polycarbonat, wie dem Bisphenol A-Polycarbonat und einem Copolymerisat aus monomeren Estern der Acryl- und/oder Methacrylsäure mit $C_1$-$C_{10}$-Alkoholen und einem UV-absorbierendem Monomeren der Formel

$$H_2C = \overset{\overset{\displaystyle R_1}{|}}{C} - \overset{\overset{\displaystyle O}{\|}}{C} - Y - Z,$$

worin $R_1$ für Wasserstoff oder einen Methylrest und Y für Sauerstoff oder einen Rest $NR_2$ mit $R_2$ Wasserstoff oder Alkylrest stehen, und Z ein UV-absorbierender Rest, nämlich ein 2-Hydroxyphenylbenzotriazolrest, ein 2-Hydroxybenzo- oder acetophenonrest oder ein $\alpha$-Cyano-$\beta$,$\beta$-diphenylrest ist, bestehen, sind in der deutschen Anmeldung P 35 18 538.4 beschrieben.

Solche, auch thermoplastisch verarbeitbare Polymermischungen aus Polycarbonat und Copolymeren des Methylmethacrylats und Monomeren mit ausgeprägtem Absorptionsvermögen für Ultraviolettstrahlung, und die als Lichtschutzmittel zur Verbesserung der Lichtbeständigkeit von z.B. Kunststoffen, insbesondere durch deren Beschichtung dienen, sind nur sehr speziell brauchbare Polymermischungen und von dem hohen Preis der damit eingebrachten UV-Absorber her, für breit anwendbare, thermoplastisch verarbeitbare Massen, prohibitiv.

In der *) deutschen Anmeldung P 36 32 946.0 sind thermoplastisch verarbeitbare Methylmethacrylat-Copolymere mit Methacrylamiden als Comonomere, die am Amidstickstoff mit einem organischen Rest eines cyclischen Moleküls substituiert sind, und der weiter kein ausgeprägtes UV-Absorptionsvermögen besitzt, beschrieben. Diese Copolymeren bilden mit Polycarbonaten, insbesondere Bisphenol A-Polycarbonaten, transparente, thermoplastisch verarbeitbare Polymermischungen.

Thermoplastische Formmassen als Polymermischungen aus einem Polycarbonat, einem Copolymeren, aus Styrol, Methylmethacrylat und N-Phenylmaleinimid, und einem Pfropf polymerisat von Methylmethacrylat auf Kautschuk, sind nach EP-A 173 146 nicht verträglich. Ebenso sind die aus EP-A 114 231 bekannten Polymermischungen, bestehend aus einem Polycarbonat und einem Copolymeren von Methylmethacrylat/N-Phenylmaleinimid und/oder einem EPDM-g-Methylmethacrylat/N-Phenylmaleinimid-Copolymeren, nicht voll kompatibel und gehören als solche zu den Polymerblends.

Aufgabe und Lösung

Die Schaffung verträglicher, als Formmassen verarbeitbarer Polymermischungen aus Polycarbonat und einem Polymeren, das zu hohen Anteilen aus Methylmethacrylat besteht, durch Einbau eines technisch zugänglichen und preiswerten Maleinsäure-Derivats in das Methylmethacrylat-Polymere durch Copolymerisation, war zu prüfen.

Gegenstand der Erfindung sind thermoplastische Formmassen, die verträgliche Polymermischungen von Polycarbonaten mit durch Copolymerisation von Methylmethacrylat, N-Cyclohexylmaleinimid bzw. N-Alkylcyclohexylmaleinimiden und gegebenenfalls weiteren Monomeren, wie insbesondere $\alpha$-Methylstyrol oder anderen Methylacryl- bzw. Acrylestern, hergestellten Polymerisaten sind.

Es wurde gefunden, daß glasklare Polymethacrylatharze mit Kunststoffeigenschaften und Polycarbonate, wie das Polycarbonat des Bisphenol A, das seinerseits zu den schlagzähen, transparenten Kunststoffen zählt, überraschenderweise, nach den für "Compatible Polymers" in Polymer Handbook, Second Edition, 1975, III, 211 bis 213, ersichtlichen Kriterien, zu verträglichen und wiederum glasklaren neuen Kunststoffen legiert werden können, wenn als Polymethacrylatharze Copolymerisate mit hohen Anteilen, d.h. 95 bis 40 Gew.-%, insbesondere 95 bis 50 Gew.-%, Methylmethacrylat und Anteilen von 5 bis 40 Gew.-% eines, gegebenenfalls alkyl- oder arylsubstituierten, N-Cyclohexylmaleinimids, und die noch weitere Monomere, wie insbesondere $\alpha$-Methylstyrol und/oder weitere Methacryl-bzw. Acrylverbindungen, insbesondere deren Ester, in Mengen von 0 bis 40 Gew.-%, insbesondere in Mengen von 2,5 bis 40 Gew.-% und vor allem in Mengen von 5 bis 35 Gew.-% enthalten können, eingesetzt werden.

Daß der Einbau von N-Cyclohexylmaleinimid in Methylmethacrylat-Polymerisate im Gegensatz zu dem aus dem Stand der Technik her bekannten Vorgehen mit entsprechenden N-Phenylmaleinimid-Copolymerisaten, den Nachteil der Nichtverträglichkeit mit Polycarbonaten in solchen Polymermischungen behebt, ist überraschend.

Die Verträglichkeit von Polycarbonat und Polymethacrylatharz wird erfindungsgemäß dadurch herbeigeführt, daß N-Cyclohexylmaleinimide der allgemeinen Formel:

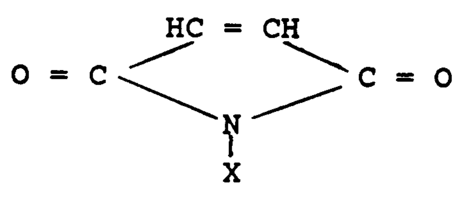

I,

wobei

X ein Cyclohexyl- oder ein einfach oder mehrfach substituierter Cyclohexylrest ist, wobei die Substituenten Alkylreste mit 1 bis 6 C-Atomen oder ein Phenylrest sind,

als Comonomere in Polymethacrylatharz einpolymerisiert sind.

Beispiele für solche Maleinimid-Comonomere sind N-Cyclohexylmaleinimid, N-2- bzw. 4-Methylcyclohexylmaleinimid, N-3,3,5-Trimethylcyclohexylmaleinimid, N-4-Ethylcyclohexylmaleinimid, N-2- bzw. 4-tert-Butylcyclohexylmaleinimid, N-2-Phenylcyclohexylmaleinimid.

Die vorliegende Erfindung ist gerichtet auf eine transparente, thermoplastisch verarbeitbare Polymermischung bestehend aus

*) noch nicht veröffentlichten

(A) einem aromatischen Polycarbonat und

(B) einem Methacrylat-Copolymerisat,

wobei das Copolymerisat (B)

1. aus 40 bis 95 Gew.-%, insbesondere 50 bis 95 Gew.-%, Methylmethacrylateinheiten und weiteren $\alpha,\beta$-ungesättigten Monomereinheiten in Mengen von 0 bis 40 Gew.-% und, insbesondere 2,5 bis 40 Gew.-%

2. aus 5 bis 40 Gew.-% Maleinimideinheiten, d.h. Monomeren der allgemeinen Formel I

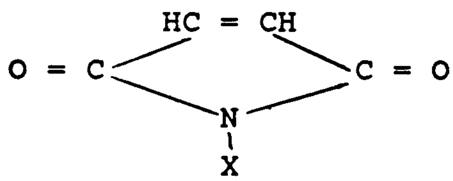

I,

wobei

X ein Cyclohexyl- oder ein einfach oder mehrfach substituierter Cyclohexylrest ist, wobei die Substituenten Alkylreste mit 1 bis 6 C-Atomen oder ein Phenylrest sind,

besteht und

3. ein Molekulargewicht über 30 000 hat.

Das Polycarbonat (A) ist insbesondere das Reaktionsprodukt von 2,2-Bis-(4-hydroxyphenyl)-propan, als Bisphenol A bekannt, und Phosgen.

Das Copolymerisat (B) und die darin copolymerisierten Monomeren der Formel I zeichnen sich gegenüber den in der deutschen Anmeldung P 35 18 538.4 beschriebenen Copolymeren und Monomeren dadurch aus, daß sie vom gesamten optisch-sichtbaren Bereich her bis hin in den UV-Bereich von 340 nm keine wesentliche Absorption haben.

Durchführung der Erfindung

Die erfindungsgemäß mit Polycarbonaten, insbesondere dem Polycarbonat von Bisphenol A, verträglichen Polymethacrylatharze, sind wesentlich aus Methylmethacrylat aufgebaut. In Mengen von 5 bis 40 Gew.-% enthält erfindungsgemäß das Methacrylatpolymere einpolymerisierte Cyclohexylmaleinimid-Einheiten oben angegebener Struktur. Das Copolymerisat kann in Mengen von 0 bis 40 Gew.-%, insbesondere in Mengen von 2,5 bis 40 Gew.-% und vor allem in Mengen von 5 bis 35 Gew.-%, weitere Einheiten $\alpha,\beta$-ungesättigter Monomerer, wie z.B. Styrol, $\alpha$-Methylstyrol, Acrylsäure bzw. Methacrylsäure oder deren Ester oder deren Amide, die auch am Amidstickstoff substituiert sein können, enthalten.

Diese $\alpha,\beta$-ungesättigten Monomere entsprechen der Formel

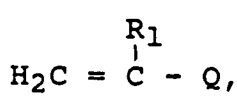

worin

$R_1$ : H oder $CH_3$ und

Q : Arylrest, insbesondere Phenyl oder substituiertes Phenyl, oder

Q :

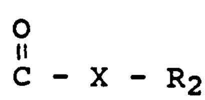

mit X = O oder $NR_3$ sind, und $R_2$ und $R_3$ : H oder Alkyl mit 1 bis 14 C-Atomen, wobei im Falle $R_1$ = $CH_3$ und X = O, Alkyl ein solches mit 2 bis 14 C-Atomen ist, oder Cycloalkyl mit 5 bis 10 C-Atomen oder Aryl mit 6 bis 10 C-Atomen

bedeuten.

Die Herstellung dieser Copolymerisate wird nach bekannten Verfahren zur Polymerisation $\alpha,\beta$-ungesättigter Verbindungen, insbesondere der radikalischen Polymerisation, beispielsweise in Substanz oder in Lösung oder als Perlpolymerisation, durchgeführt. Als radikalische Polymerisationsinitiatoren können dazu Azoverbindungen, wie Azodiisobutyronitril, oder Peroxide, wie Dibenzoylperoxid, Dilauroylperoxid, oder Redoxsysteme dienen, oder die Startradikale können strahlenchemisch erzeugt werden.

Es ist bekannt, daß die Verträglichkeit von Polymeren in Mischungen von ihren Polymerisationsgraden abhängt, und zwar nimmt in der Regel die Verträglichkeit mit steigendem Molekulargewicht der Polymeren ab, wobei die Mischung dann zwei- bzw. mehrphasig wird. Für die Herstellung von erfindungsgemäßen Polycarbonat-Polymethacrylat-Legierungen werden Methylmethacrylat-Copolymere eingesetzt, die Molekulargewichte, Mw, in g pro Mol, wie sie beispielsweise mit Hilfe der Gelpermeations-Chromatographie oder mit der Streulichtmethode bestimmbar sind, über 30 000, von etwa 30 000 bis 200 000, vorzugsweise etwa 50 000 bis 100 000 haben und deren reduzierten Viskositäten $\eta$ spec/c, gemessen gemäß DIN 51 562, *) im Bereich von 18 bis 65 ml/g, bevorzugt im Bereich von 30 bis 50 ml/g, liegen. Die Herstellung der so molekulargewichtsgeregelten Copolymerisate wird insbesondere durch Polymerisation in Gegenwart von Übertragungsreglern, wie den dazu bekannten Mercaptanen, durchgeführt (s. dazu Houben-Weyl, Methoden der organischen Chemie, Band XIV/1, 1961, Seite 66). So sind beispielsweise Methylmethacrylat-Copolymerisate mit 6 bis 15 Gew.-% N-Cyclohexylmaleinimid und einem $\eta$spec/c von 33 ml/g *) über den gesamten Legierungsbereich mit Bisphenol A-Polycarbonat, z.B. Makrolon ® 1189, das ein $\eta$spec/c von 43 ml/g *) hat, verträglich.

Die erfindungsgemäßen Polycarbonat-verträglichen Methylmethacrylat-Copolymerenlassen sich zu glasklaren farblosen Formkörpern thermoplastisch verarbeiten, welche Vicat-Erweichungstemperaturen, VET, gemessen nach DIN 53 460, von etwa 120 bis 150 Grad C aufweisen.

Als mit den Methylmethacrylat-Maleinimid (I)-Copolymerisaten verträgliche Polycarbonate, werden insbesondere aromatische Polycarbonate, vor allem Polycarbonate des Bisphenol A, eingesetzt.

Polycarbonate des Bisphenol A sind glasklare, zähe Kunststoffe und z.B. unter der Bezeichnung Makrolon ®, im Handel. Die Molekulargewichte, Mw (s. dazu oben), der diesen Kunststoffen zugrundeliegenden Carbonatpolymeren liegen im Bereich von etwa 20 000 bis 40 000 und die Vicat-Erweichungstemperaturen, VET, dieser Kunststoffe, gemessen nach DIN 53 460, liegen bei 140 Grad C.

## Vorteile der Erfindung

Durch Legieren der beiden Kunststoffarten wird ein transparentes Kunststoffsystem mit anderen, insbesondere mit günstigeren Eigenschaften erhalten, als sie die Einzelkunststoffe vor dem Legieren zeigen. Beispielsweise kann die thermoplastische Verarbeitung des Poly-Bisphenol A-Carbonats, das als Materialeigenschaft eine hohe Schmelzviskosität hat, durch Zulegieren von thermoplastischem Polymethacrylat-Kunststoff erleichtert werden, ohne daß andere Eigenschaften des Polycarbonates, wie dies bekanntermaßen durch Zulegieren niedermolekularer Acrylpolymerer geschieht, wesentlich verändert werden.

Die Wärmeformbeständigkeiten nach Vicat (VET nach DIN 53 460) bzw. die mit diesen korrelierenden Glasübergangstemperaturen $T_g$ (gemessen nach der DSC-Methode, s. dazu Polymer Handbook, 2. Auflage, II, S. 139 - 141) der erfindungsgemäß einzusetzenden Polymethacrylatharze, mit Werten von etwa 130 bis 155 Grad C, liegen gegenüber denen von gebräuchlichen, handelsüblichen Polymethacrylatformmassen, deren Werte etwa 100 Grad C betragen, deutlich höher. Erfindungsgemäße Legierungen zeigen überraschenderweise über dem gesamten bzw. einem weiten Mischungsbereich Wärmeformbeständigkeiten, die gegenüber denjenigen der Einzelkunststoffe, wie insbesondere dem gegenüber Polymethylmethacrylat deutlich höher wärmeformbeständigen Polycarbonat des Bisphenol A, nur um wenige Temperaturgrade niedriger liegen.

Mischungen der Polymer-Komponenten A und B lassen sich beispielsweise als Granulat durch Extrusion oder Spritzguß zu den verschiedensten Formkörpern, bestehend aus den erfindungsgemäßen Polymermischungen verarbeiten. Als Beispiele seien Platten, Hohlkammerplatten, Formkörper für optische Zwecke, wie Linsen oder Prismen oder Lichtleiter oder Reflektoren und optisch lesbare Informationsträger genannt. Die heute zu deren Herstellung u.a. verwendeten Polymer-Materialien, wie Bisphenol A-Polycarbonat oder Polymethylmethacrylat, verursachen Probleme bezüglich optischer Doppelbrechung bzw. Wasseraufnahme. Hier zeigen die erfindungsgemäßen Materialien deutliche Vorteile. Auch durch Gießen von die Polymerkomponenten A und B enthaltenden Lösungen, lassen sich Folien oder Formkörper der erfindungsgemäßen Polymermischungen herstellen.

*)in Chloroform als Lösungsmittel

BEISPIELE

A. Beispiele 1 - 6: Herstellung von Copolymerisaten

Beispiel 1

In 90 Gewichtsteilen Methylmethacrylat (MMA) werden unter leichtem Erwärmen 10 Gew.-Teile N-Cyclohexylmaleinimid (CHMI) gelöst. Anschließend werden 0,2 Gew.-Teile Dilauroylperoxid und 0,05 Gew.-Teile 2,2-Bis(t-butylperoxy)butan als Initiatoren sowie 1,3 Gew.-Teile Dodecylmercaptan als Molekulargewichtsregler unter Rühren hinzugefügt. Diese Lösung wird im Wasserbad in einem Folienschlauch 16 h bei 52 Grad C und 10 h bei 58 Grad C polymerisiert und zur Endpolymerisation 10 h bei 120 Grad C im Trockenschrank getempert. Das so gewonnene und zur Herstellung von Polymermischungen gemäß den Beispielen 32 - 36 eingesetzte Copolymerisat ist klar und zeigt einen leichten Gelbton. Es wurde das mittlere Molekulargewicht, Mw, zu 90 000 und der VET-Wert zu 119 Grad C bestimmt.

Beispiel 2

In 60 Gewichtsteilen MMA werden unter leichtem Erwärmen zunächst 20 Gew.-Teile CHMI und 20 Gew.-Teile $\alpha$-Methylstyrol ($\alpha$-MS) gelöst. Anschließend werden zusätzlich die Initiatoren tert-Butylperpivalat (0,4 Gew.-Teile, Niederzerfaller), Dilauroylperoxid (0,17 Gew.-Teile, Mittelzerfaller) und 2,2-Bis-(t-butylperoxy)butan (0,05 Gew.-Teile, Hochzerfaller), sowie 0,55 Gew.-Teile Dodecylmercaptan (Molekuargewichtsregler) hinzugefügt.

Diese Lösung wird im Wasserbad in einem Folienschlauch 24 h bei 53 Grad C sowie 24 h bei 60 Grad C polymerisiert und zur Endpolymerisation 10 h im Trockenschrank bei 125 Grad C getempert. Das zur Herstellung von Polymermischungen gemäß Beispiele 7 - 11 eingesetzte Copolymerisat zeigt einen leichten Gelbton und eine schwache Trübung. Das mittlere Molekulargewicht Mw beträgt 72 000.

Beispiel 3

Eine Lösung aus 80 Gew.-Teilen MMA, 10 Gew.-Teilen CHMI und 10 Gew.-Teilen $\alpha$-MS werden gemäß Beispiel 2 Polymerisiert, wobei die Polymerisationszeit 46 h bei einer Wasserbadtemperatur von 60 Grad C beträgt. Das mittlere Molekulargewicht wird zu Mw = 87 000 bestimmt. Das Polymerisat ist leicht gelblich und klar.

Beispiel 4

60 Gew.-Teile MMA werden mit 30 Gew.-Teilen CHMI und 10 Gew.-Teilen $\alpha$-MS zusammen, wiederum gemäß Beispiel 2 polymerisiert, wobei die Menge an Molekulargewichtsregler auf 0,4 Gew.-Teile reduziert wird und die Polymerisationszeit 22 h bei einer Wasserbadtemperatur von 60 Grad C beträgt. Das mittlere Molekulargewicht Mw des erhaltenen leicht gelblichen und klaren Polymerisats ist 85 000.

Beispiele 5 und 6

Lösungen von 58 Gew.-Teilen MMA, 20 Gew.-Teilen CHMI, 20 Gew.-Teilen $\alpha$-MS und 2 Gew.-Teilen Methylacrylat (MA) bzw. Cyclohexylacrylat (CHA) werden gemäß Beispiel 2 polymerisiert, wobei die Polymerisationszeiten im Wasserbad bei 60 Grad C im Fall des MA-haltigen Copolymeren 46 h und im Fall des CHA-haltigen Copolymeren 70 h betragen. Die Polymerisate sind leicht trüb und gelblich.
Molekulargewichte und VET's:
MA-haltiges Copolymer: Mw = 86 000; VET = 139 Grad C
CHA-haltiges Copolymer: Mw = 82 000; VET = 137 Grad C.

B. Beispiele 7 - 36: Erfindungsgemäße Mischungen

Beispiele 7 - 11

Makrolon ® 1189 und das gemäß Beispiel 2 hergestellte Copolymerisat werden beide in Granulatform in den angegebenen Mengenverhältnissen gemischt und auf einem Einschneckenextruder als Band extrudiert. Von Bandproben werden visuelle Prüfungen, DSC-Messungen der Glastemperatur Tg (s. dazu: Polymer-Handbook, 2. Auflage, II, S. 139 bis 141) bzw. Messungen der Vicat-Erweichungstemperatur VET nach DIN 53 460 an 3 mm dicken Prüfplättchen, die auf einer Anker-Spritzguß-Maschine aus den extrudierten Bändern hergestellt werden, durchgeführt. Desweiteren wird auf einer Kofler-Heizbank (Chem.-Ing.-Techn. 1950, S. 289) ein Trübungspunkt $T_{Tr}$ bestimmt, der den von der Zusamensetzung der Mischung abhängigen Temperaturpunkt charakterisiert, an dem das Gemisch einen Phasenübergang, homogen zu heterogen, bei steigender Temperatur aufweist: LCST-Verhalten: "Lower Critical Solution Temperature" (s. dazu D.R. Paul in Polymer Blends and Mixtures, 1985, S. 1 - 3, Martinus Nijhoff Publishers, Dordrecht/Boston/Lancester).

| Beisp. Nr. | Makrolon/ Copolymerisat (Gew.- Teile) | Aussehen des Extrudats | Tg (°C) | VET (°C) | $T_{TR}\pm15$ (°C) |
|---|---|---|---|---|---|
| 7 | 90 / 10 | klar, farblos | 134 | – | 207 |
| 8 | 70 / 30 | klar, farblos | 133 | – | 191 |
| 9 | 50 / 50 | klar, farblos | 133 | 135 | 209 |
| 10 | 30 / 70 | klar, farblos | 133 | – | 243 |
| 11 | 10 / 90 | klar, leicht gelblich | 134 | – | >260 |
| Vergl. | Makrolon 1189 | klar, farblos | 138 | 138 | |
| Vergl. | Copolymerisat | klar, leicht gelblich | 140 | 142 | |

Striche bei Meßdaten in der Tabelle und den nachfolgenden Tabellen bedeuten, daß keine Messungen durchgeführt wurden.

Beispiele 12 - 16:

Makrolon ® 1189 und das gemäß Beispiel 3 hergestellte Copolymerisat werden in den angegebenen Mengenverhältnissen wieder als Granulate gemischt, extrudiert und gemäß den Beispieln 7 - 11 auf Tg und $T_{Tr}$ untersucht.

| Beisp. Nr. | Makrolon/ Copolymerisat (Gew.-Teile) | Aussehen des Extrudats | Tg (°C) | $T_{Tr}\pm15$ (°C) |
|---|---|---|---|---|
| 12 | 90 / 10 | klar, farblos | – | 205 |
| 13 | 70 / 30 | leicht trüb, farblos | – | 185 |
| 14 | 50 / 50 | leicht trüb, farblos | 129 | 187 |
| 15 | 30 / 70 | leicht trüb, farblos | – | 231 |
| 16 | 10 / 90 | klar, farblos | – | >260 |
| Vergl. | Copolymerisat | klar, farblos | 130 | |

Beispiele 17 - 21

Makrolon ® 1189 und das gemäß Beispiel 4 hergestellte Copolymerisat werden in Granulatform und in den angegebenen Mengenverhältnissen gemischt, extrudiert und gemäß den Beispielen 7 - 11 auf Tg und $T_{Tr}$ untersucht.

| Beisp. Nr. | Makrolon/ Copolymerisat (Gew.-Teile) | Aussehen des Extrudats | Tg (°C) | $T_{Tr}$±15 (°C) |
|---|---|---|---|---|
| 17 | 90 / 10 | klar, farblos | – | 201 |
| 18 | 70 / 30 | leicht trüb, farblos | – | 191 |
| 19 | 50 / 50 | leicht trüb, gelblich | 136 | 199 |
| 20 | 30 / 70 | klar, gelblich | – | 230 |
| 21 | 10 / 90 | klar, gelblich | – | >260 |
| Vergl. | Copolymerisat | klar, gelblich | 141 | |

Beispiele 22 - 31

Makrolon ® 1189 und die gemäß den Beispielen 5 und 6 hergestellten Copolymerisaten werden in den angegebenen Mengenverhältnissen gemischt, extrudiert und gemäß den Beispielen 7 - 11 auf die Trübungstemperatur $T_{Tr}$ untersucht.

| Beisp. Nr. | Makrolon/ Copolymerisat nach Beisp. 5 mit MA (Gew.-Teile) | Aussehen des Extrudats | VET (°C) | $T_{Tr}$±15 (°C) |
|---|---|---|---|---|
| 22 | 90 / 10 | klar, farblos | — | 189 |
| 23 | 70 / 30 | leicht trüb, farblos | — | 182 |
| 24 | 50 / 50 | leicht trüb, farblos | 135 | 185 |
| 25 | 30 / 70 | klar, farblos | — | 192 |
| 26 | 10 / 90 | klar, leicht gelblich | — | 198 |

| Beisp. Nr. | Makrolon/ Copolymerisat nach Beisp. 6 mit CHA (Gew.-Teile) | Aussehen des Extrudats | VET (°C) | $T_{Tr}$±15 (°C) |
|---|---|---|---|---|
| 27 | 90 / 10 | klar, farblos | — | 205 |
| 28 | 70 / 30 | klar, farblos | — | 192 |
| 29 | 50 / 50 | leicht trüb, farblos | 134 | 206 |
| 30 | 30 / 70 | klar, farblos | — | 240 |
| 31 | 10 / 90 | klar, leicht gelblich | — | >260 |

Beispiele 32 - 36:

Makrolon ® 1189 und das gemäß Beispiel 1 hergestellte Copolymerisat werden in den angegebenen Mengenverhältnissen gemischt, extrudiert und gemäß den Beispielen 7 - 11 auf die Trübungstemperatur $T_{Tr}$ untersucht.

| Beisp. Nr. | Makrolon/ Copolymerisat nach Beisp. 1 (Gew.-Teile) | Aussehen des Extrudats | VET (°C) | $T_{Tr}$±15 (°C) |
|---|---|---|---|---|
| 32 | 90 / 10 | klar, farblos | — | 230 |
| 33 | 70 / 30 | leicht trüb, farblos | — | 214 |
| 34 | 50 / 50 | leicht trüb, farblos | 125 | 222 |
| 35 | 30 / 70 | klar, leicht gelblich | — | 232 |
| 36 | 10 / 90 | klar, leicht gelblich | — | >260 |

## Patentansprüche

1. Verträgliche, thermoplastisch verarbeitbare Polymermischung bestehend aus (A) einem aromatischen Polycarbonat und (B) einem Methacrylat-Copolymerisat,
   dadurch gekennzeichnet,
   daß das Copolymerisat (B)
   1. aus 40 bis 95 Gew.-% Methylmethacrylateinheiten und weiteren $\alpha,\beta$-ungesättigten Monomereinheiten in Mengen von 0 bis 40 Gew.-% und
   2. aus 5 bis 40 Gew.-% Maleinimideinheiten aus Monomeren der allgemeinen Formel I

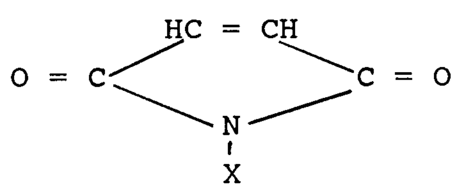

I,

   wobei X ein Cyclohexyl- oder ein einfach oder mehrfach substituierter Cyclohexylrest ist, wobei die Substituenten Alkylreste mit 1 bis 6 C-Atomen oder ein Phenylrest sind,

   besteht und
   3. ein Molekulargewicht über 30 000 hat.

2. Verträgliche, thermoplastisch verarbeitbare Polymermischungen gemäß Anspruch 1, dadurch gekennzeichnet, daß der organische Rest X der Maleinimideinheit ein Cyclohexylrest ist.

3. Verträgliche, thermoplastisch verarbeitbare Polymermischung gemäß Anspruch 1, dadurch gekennzeichnet, daß der organische Rest X der Maleinimideinheit ein methylsubstituierter Cyclohexylrest ist.

4. Verträgliche, thermoplastisch verarbeitbare Polymermischung gemäß den Ansprüchen 1 bis 3, dadurch gekennzeichnet, daß das Copolymerisat (B) aus Methylmethacrylateinheiten und Monomereinheiten der Formel I und bis zu 40 Gew.-% $\alpha$-Methylstyrol-Einheiten besteht.

5. Verträgliche, thermoplastisch verarbeitbare Polymermischung gemäß den Ansprüchen 1 bis 4, dadurch gekennzeichnet, daß das Copolymerisat (B) Methylmethacrylateinheiten und Monomereinheiten der Formel I und aus bis zu 40 Gew.-% weiteren Acryl- und oder Methacrylverbindungen besteht.

**6.** Verträgliche, thermoplastisch verarbeitbare Polymermischung gemäß den Ansprüchen 1 bis 5, dadurch gekennzeichnet, daß das Polycarbonat (A) das Polycarbonat von 2,2-Bis-(4-hydroxyphenyl)-propan ist.

**7.** Verwendung von Polymermischungen gemäß den Ansprüchen 1 bis 6 für die Herstellung von Formkörpern.

**8.** Verwendung von Polymermischungen gemäß den Ansprüchen 1 bis 6 für die Herstellung von für optische Zwecke zu verwendenden Formkörpern.

**9.** Verwendung von Polymermischungen gemäß den Ansprüchen 1 bis 6 für die Herstellung optisch lesbarer Informationsträger.

**Claims**

**1.** A compatible, thermoplastically workable polymer mixture consisting of (A) an aromatic polycarbonate and (B) a methacrylate copolymer, characterised in that the copolymer (B) consists of

1. 40 to 95 wt.% of methyl methacrylate units and other $\alpha,\beta$-unsaturated monomer units in amounts of from 0 to 40 wt.% and
2. 5 to 40 wt.% of maleinimide units synthesised from monomers of general Formula I

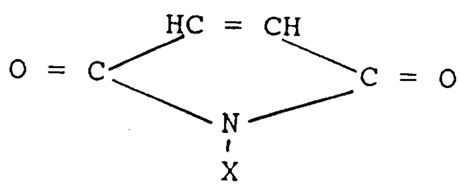

I,

wherein X represents a cyclohexyl or a mono- or poly-substituted cyclohexyl group, the substituents being alkyl groups having 1 to 6 carbon atoms, or a phenyl group, and

3. has a molecular weight of more than 30,000.

**2.** Compatible, thermoplastically workable polymer mixtures according to Claim 1, characterised in that the organic group X of the maleinimide units is a cyclohexyl group.

**3.** A compatible, thermoplastically workable polymer mixture according to Claim 1, characterised in that the organic group X of the maleinimide unit is a methyl-substituted cyclohexyl group.

**4.** A compatible, thermoplastically workable polymer mixture according to Claims 1 to 3, characterised in that the copolymer (B) consists of methyl methacrylate units and monomer units of Formula I and up to 40 wt.% of $\alpha$-methyl-styrene units.

**5.** A compatible, thermoplastically workable polymer mixture according to Claims 1 to 4, characterised in that the copolymer (B) consists of methyl methacrylate units and monomer units of Formula I and up to 40 wt.% of further acrylic and/or methacrylic compounds.

**6.** A compatible, thermoplastically workable polymer mixture according to Claims 1 to 5, characterised in that the polycarbonate (A) is the polycarbonate of 2,2-bis-(4-hydroxyphenyl)-propane.

**7.** Use of polymer mixtures according to Claims 1 to 6 for the production of mouldings.

**8.** Use of polymer mixtures according to Claims 1 to 6 for the production of mouldings to be used for optical purposes.

**9.** Use of polymer mixtures according to Claims 1 to 6 for the production of optically readable information carriers.

## Revendications

**1.** Mélange de polymères compatibles, transformable par voie thermoplastique, se composant de (A) un polycarbonate aromatique et (B) un copolymère de méthacrylate, caractérisé en ce que le copolymère (B)

1. se compose de 40 à 95% en poids de motifs méthacrylate de méthyle et d'autres motifs monomères $\alpha,\beta$-insaturés dans des proportions de 0 à 40% en poids, et
2. de 5 à 40% en poids de motifs maléimide provenant de monomères de formule générale I

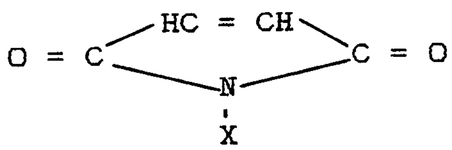

I

où X est un reste cyclohexyle ou un reste cyclohexyle substitué une ou plusieurs fois, les substituants étant des restes alkyle à 1-6 atomes de carbone ou un reste phényle,
et
3. a un poids moléculaire supérieur à 30 000.

**2.** Mélanges de polymères compatibles, transformables par voie thermoplastique selon la revendication 1, caractérisés en ce que le reste organique X du motif maléimide est un reste cyclohexyle.

**3.** Mélange de polymères compatibles, transformable par vole thermoplastique selon la revendication 1, caractérisé en ce que le reste organique X du motif maléimide est un reste cyclohexyle substitué par un groupement méthyle.

**4.** Mélange de polymères compatibles, transformable par voie thermoplastique selon l'une quelconque des revendications 1 à 3, caractérisé en ce que le copolymère (B) se compose de motifs méthacrylate de méthyle, de motifs monomères de formule I et, dans une proportion allant jusqu'à 40% en poids, de motifs $\alpha$-méthylstyrène.

**5.** Mélange de polymères compatibles, transformable par voie thermoplastique selon l'une quelconque des revendications 1 à 4, caractérisé en ce que le copolymère (B) se compose de motifs méthacrylate de méthyle, de motifs monomères de formule I et, dans une proportion allant jusqu'à 40% en poids, d'autres composés acryliques et/ou méthacryliques.

**6.** Mélange de polymères compatibles, transformable par voie thermoplastique selon l'une quelconque des revendications 1 à 5, caractérisé en ce que le polycarbonate (A) est le polycarbonate de 2,2-bis(4-hydroxyphényl)propane.

**7.** Utilisation de mélanges de polymères selon l'une quelconque des revendications 1 à 6 pour la fabrication de corps moulés.

**8.** Utilisation de mélanges de polymères selon l'une quelconque des revendications 1 à 6 pour la fabrication de corps moulés destinés à être utilisés dans des applications optiques.

**9.** Utilisation de mélanges de polymères selon l'une quelconque des revendications 1 à 6 pour la fabrication de supports d'information à lecture optique.